Europäisches Patentamt

European Patent Office

Office européen des brevets

(11) Veröffentlichungsnummer: **0 084 575
B1**

(12) **EUROPÄISCHE PATENTSCHRIFT**

(45) Veröffentlichungstag der Patentschrift:
**02.10.85**

(21) Anmeldenummer: **82100393.6**

(22) Anmeldetag: **21.01.82**

(51) Int. Cl.⁴: **G 07 B 13/02, H 01 H 13/70**

(54) Anordnung zur Steuerung eines elektronischen Taxameters.

(43) Veröffentlichungstag der Anmeldung:
**03.08.83 Patentblatt 83/31**

(45) Bekanntmachung des Hinweises auf die Patenterteilung:
**02.10.85 Patentblatt 85/40**

(84) Benannte Vertragsstaaten:
**AT CH DE FR GB IT LI SE**

(56) Entgegenhaltungen:
**DE - A - 2 713 207
DE - B - 2 202 865
FR - A - 2 150 225
FR - A - 2 300 481**

**IBM TECHNICAL DISCLOSURE BULLETIN, Band 24, Nr.
7B, Dezember 1981, Seiten 3937-3938, New York, USA,
R.L. BELLAMY et al.: "Alterable keyboard"
IBM TECHNICAL DISCLOSURE BULLETIN, Band 15, Nr.
6. November 1972, Seiten 1930-1931, New York, USA,
J.H. BARKER et al.: "Dummy key implementation"**

(73) Patentinhaber: **Kienzle Apparate GmbH,
Heinrich-Hertz-Strasse, D-7730 Villingen-Schwenningen
(DE)**

(72) Erfinder: **Adams, Jürgen, Am Mühlweiher 1,
D-7730 VS-Tannheim (DE)**
Erfinder: **Scholl, Hans-Peter, Wöschhalde 57,
D-7730 VS-Villingen (DE)**

(74) Vertreter: **Passarge, Karin, c/o Kienzle Apparate GmbH
Prinz-Eugen-Strasse Postfach 1640,
D-7730 Villingen-Schwenningen (DE)**

## Beschreibung

Die Erfindung bezieht sich auf eine Anordnung zur Steuerung eines elektronischen Taxameters. Bei derartigen Geräten ist es im allgemeinen üblich, drei bis acht Tasten vorzusehen, um die verschiedenen Funktionen des Taxameters zu steuern. Die meisten elektronischen Taxameter haben hierfür drei bis vier Tasten. Da es aber angesichts der Flexibilität der Mikroprozessortechnik üblich geworden ist, die Taxameter mit einer ganzen Anzahl von Zusatzfunktionen auszurüsten, die bei mechanischen Taxametern früher nicht üblich gewesen sind, wie beispielsweise die Summenbildung, das Löschen von Kontrollzählerständen usw., ist es bei einer Ausrüstung des Gerätes mit drei bis vier Steuerungstasten notwendig, die Auslösung der Funktion von der kombinierten Betätigung mehrerer Tasten abhängig zu machen. Dies bedeutet, daß die Bedienung des Taxameters erschwert ist, da man dem Taxifahrer zumuten muß, zur Auslösung der Sonderfunktionen jeweils erst auf die Bedienungsanleitung Rückgriff zu nehmen, um nachzulesen durch kombinierte Betätigung welcher Tasten eine bestimmte Funktion ausgelöst werden kann.

Dementsprechend würde es sich anbieten, durch die Anordnung einer größeren Anzahl von Tasten die Bedienung des Gerätes zu vereinfachen. Dies ist in verschiedenen Fällen auch schon gemacht worden. Dem stehen aber in einigen Fällen Zulassungsbestimmungen entgegen, d. h. in verschiedenen Ländern wird vorgeschrieben, daß der Taxameter nur durch die Anwendung einer bestimmten Schaltfolge in die einzelnen Funktionsstellungen gebracht werden kann.

Aus der DE-OS 2 202 865 ist es beispielsweise schon bekannt, die Taxameter mit einer großen Anzahl von Tasten auszurüsten und die Tastensignale über eine Codiermatrix einem Register zuzuführen, in dem diese Information gespeichert bleibt, solange bis ein neues Signal durch die Taste gegeben wird.

Aufgabe der Erfindung ist es, eine Anordnung zur Steuerung eines elektronischen Taxameters zu schaffen, die es erlaubt, das Gerät ohne großen Mehraufwand wahlweise mit einer geringeren Anzahl von Tasten zu liefern, wobei jeder Taste mehrere Funktionen zugeordnet sein können, oder aber auch mit einer sehr viel größeren, beispielsweise doppelt so großen Anzahl der Tasten, denen dann vorzugsweise jeweils nur eine einzige Funktion zugeordnet wird.

Dementsprechend bezieht sich die Erfindung auf eine Anordnung zur Steuerung eines elektronischen Taxameters hinsichtlich seiner verschiedenen Schaltzustände vermittels Tasten, die über eine Codiermatrix codierte Signale an eine Eingangsschaltung abgeben, und ist dadurch gekennzeichnet, daß am Gehäuse eine Tastenleiste vorgesehen ist, die für eine Maximalzahl von Tasten ausgelegt ist, aber wahlweise auch mit weniger Tasten belegbar ist, daß im Gehäuse eine der maximalen Tastenzahl entsprechende Anzahl von Schaltern vorhanden ist und daß über Tasteninformationen oder Sprungbefehle im Tarifspeicher verschiedene Tastenabfragezyklen in dem Systemprogramm ausgelöst werden, durch die bei einer geringeren Anzahl von vorhandenen Tasten einer Taste bzw. einer Tastencodierung mehrere Funktionen zuordenbar sind, hingegen bei einer höheren Anzahl von vorhandenen Tasten bzw. Tastencodierungen vorzugsweise nur eine Funktion je Taste.

Diese Ausbildung und Steuerung des Taxameters hat den Vorteil, daß man das Gerät in einfachster Weise an die verschiedensten Wünsche der Kunden in den einzelnen Tarifbezirken, aber auch an die verschiedenen Zulassungsbestimmungen der einzelnen Länder anpassen kann.

Durch einen geringfügigen Mehraufwand an Bauteilen schafft man so eine flexible Steuerung für den Taxameter, ohne daß es komplizierter Umbauaktionen bei einer Änderung der Zulassungsvorschriften bedarf. Gleichzeitig ist es aber auch möglich, den Taxameter mit einem Zusatzprogrammbaustein mit zusätzlichen Funktionen auszurüsten, die den Taxameter für verschiedene Länder brauchbar machen.

Gemäß einer zweckmäßigen Weiterbildung der Erfindung ist die Tastenleiste so ausgebildet, daß sie für jede der maximal vorgesehenen Tasten eine Ausnehmung enthält, in die entweder eine Taste mit Feder einsetzbar ist, die über die Tastenleiste vorspringt, oder daß ein Füllstück die Ausnehmung verschließt, wobei das Füllstück entweder plan mit der Tastenleiste verläuft oder gegenüber der Tastenleiste sogar etwas zurückversetzt ist. Eine derartige Ausbildung der Tastenleiste hat den Vorteil, daß sie blinde Tasten, also Tasten, die keine Funktion haben, vermeidet, so daß der Taxifahrer durch das Vorhandensein solcher Blindtasten nicht beirrt werden kann.

Weitere Einzelheiten der Erfindung ergeben sich anhand der Beschreibung der Zeichnungen. Es zeigt

Fig. 1 ein Übersichtsschaltbild der erfindungsgemäßen Anordnung zur Steuerung eines elektronischen Taxameters,

Fig. 2 eine Frontansicht des Gerätes,

Fig. 3 und 4 sind Detaildarstellungen der Frontseite des Gerätes auf den Schnittlinien A-B gemäß Fig. 2,

Fig. 5 und 6 zeigen im Detail die Tasten und die Füllstücke gemäß Fig. 3 und 4.

Fig. 7 zeigt einen Algorithmus eines Programms zur Abfrage von vier Tasten.

Fig. 8 und 9 zeigen die Algorithmen einer Abfrage von acht verschiedenen Tasten.

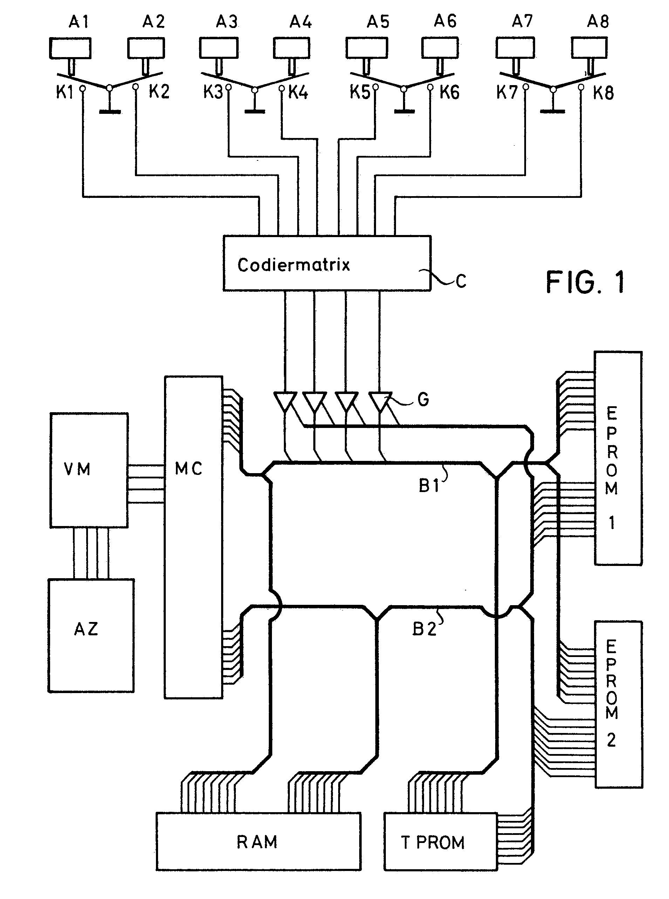

Wie Fig. 1 zeigt, kann der Taxameter maximal mit acht Tastenbausteinen A1 bis A8 ausgerüstet sein, die bei ihrer Betätigung je einen Kontakt K1 bis K8 vorübergehend schließen. Je ein Pol dieser Kontakte K1 bis K8 ist jeweils an Masse gelegt, die anderen Pole sind mit einer Codiermatrix C in Form einer Diodenmatrix verbunden. Über Tore G ist die Codiermatrix C auf den Datenbus B1 geschaltet derart, daß die Signale, die an der Codiermatrix C abgenommen werden, dem Mikroprozessor MC zugeführt werden können. Der Datenbus B1 verbindet den Mikroprozessor MC auch mit dem Systemprogramm EPROM1, mit einem Lebendspeicher RAM und dem Tarifspeicher TPROM, der ein PROM oder irgendein anderer programmierbarer Baustein ist. Wahlweise kann der Taxameter außer dem EPROM1 noch ein weiteres Systemprogramm EPROM2 haben, wenn die Kapazität des EPROM1 für die Realisierung der gewünschten Funktionen des Gerätes nicht ausreicht. Der Mikroprozessor MC ist ein 8 bit Mikroprozessor, der wahlweise ein integriertes Systemprogramm hat oder mit dem EPROM1 in seiner Minimalausstattung zusammenarbeitet. Welche Form gewählt wird, hängt jeweils davon ab, wie hoch die Stückzahlen sind, in der das Gerät in jeweils einer Version verkauft werden soll. Der Tarifspeicher TPROM kann wahlweise ein nur einmal programmierbares Wegwerfteil sein, er kann aber auch ein löschbarer und wieder verwendbarer Speicher sein, je nach der gewählten Organisationsform. Ein Adreßbus B2, bestehend auch jeweils aus einer Mehrzahl von Leitern, verbindet ebenfalls den Mikroprozessor MC, den Lebendspeicher RAM, den Tarifspeicher TPROM, die Tastentore G und die Systemspeicher EPROM1 und wahlweise EPROM2. Der Mikroprozessor MC ist über Verstärker VM mit einer Anzeige AZ verbunden, der Verstärker VM bewirkt auch das Multiplexen der Anzeige AZ.

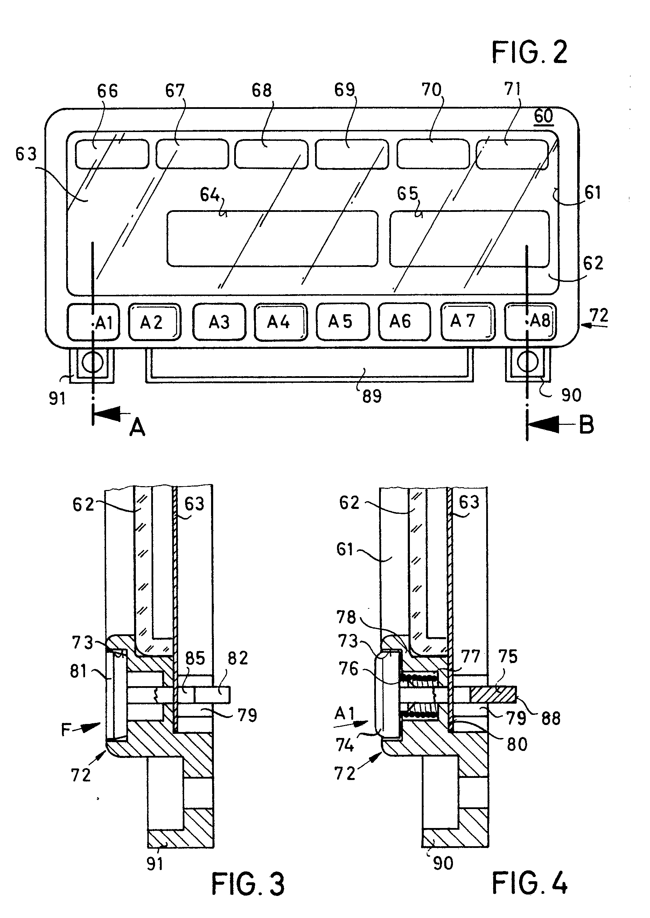

Statt jeder der Tasten A1 bis A8 kann ein Füllstück verwendet werden. Hierzu wird auf die Fig. 2 bis 6 verwiesen.

Fig. 2 ist eine Frontansicht des elektronischen Taxameters. In einem Frontrahmen 60, der auf das übrige Gehäuse von vorne aufsteckbar ist, ist eine Ausnehmung 61 vorgesehen, die durch ein Frontglas 62 ausgefüllt wird. Hinter dem Frontglas 62 befindet sich das Schriftblatt 63, in dem Ausnehmungen 64, 65 für Fahrpreise und Zuschläge und 66 bis 71 für die Anzeige der verschiedenen Taxzustände und anderer zusätzlicher Informationen vorgesehen sind. Im unteren Teil des Frontrahmens 60 ist die Tastenleiste 72 vorhanden, in deren Ausnehmungen 73 die Tasten A1 bis A8 oder Füllstücke F einsetzbar sind.

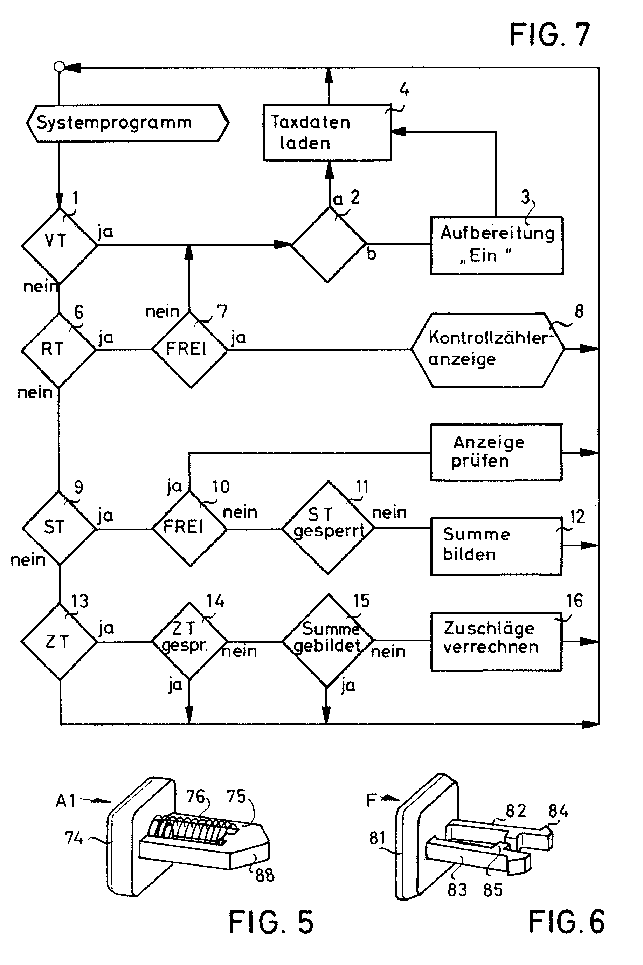

Die Beschaffenheit je einer Taste A1 zeigen insbesondere die Fig. 4 und 5. Jede Taste, beispielsweise die Taste A1, besteht aus einem Tastknopf 74 und einem in U-Form ausgebildeten Tastenschaft 75. Führungsvorsprünge für die Tastenfeder 76 sind sowohl an dem Tastknopf 74 als auch an dem Tastenschaft 75 vorgesehen, so daß die Feder 76 nur lose eingelegt zu werden braucht. Im übrigen stützen sich die Federn 76, wie Fig. 4 erkennen läßt, an entsprechenden Absätzen 77 der Tastenleiste 72 ab. Die Tastenknöpfe 74 finden in gedrücktem Zustande ihren Anschlag an einem entsprechenden Bund 78 in den Ausnehmungen 73. Mit Hilfe der Spitzen 88 der Tastenschäfte 75 wirken die Tasten A1 bis A8 auf die Kontakte K1 bis K8 ein. Die Tastenschäfte 75 sind in entsprechenden Führungen 79 der Tastenleiste 72 geführt. Mit Ansätzen 80 sind die Schriftblätter 63 zwischen den Vorsprüngen 79 gehalten, wobei der Tastenschaft 75 bei entspannter Feder 76 seinen Anschlag an dem Ansatz 80 des Schriftblattes 63 findet.

Die Füllstücke F ergeben sich aus den Fig. 3 und 6. Jedes Füllstück hat einen erweiterten Teil 81, der in seiner flächenmäßigen Ausdehnung dem Tastenknopf 74 entspricht, also die Ausnehmung 73 in der Tastenleiste 72 voll ausfüllt. Lediglich hinsichtlich seiner Höhe ist der Teil 81 derart reduziert, daß er über die Tastenleiste 72 nicht vorspringt, wahlweise sogar gegenüber der Tastenleiste leicht zurückversetzt ist. An jedem Teil 81 eines Füllstückes F sind zwei Beine 82 und 83 angeordnet, die mit Rastnasen 84 und Anschlägen 85 versehen sind. Die Beine 82 und 83 werden zum Einstecken der Füllstücke F so zusammengedrückt, daß sie in die Ausnehmungen 73 und zwischen die Vorsprünge 79 der Tastenleiste 72 eingeführt werden können. Danach springen die Beine 82 und 83 federnd auseinander derart, daß die Füllstücke F sich mit ihren Rastnasen 84 an der Rückseite der Vorsprünge 79 abstützen und also unbeweglich verrastet sind.

Wahlweise kann also in jeder der Ausnehmungen 73 entweder eine Taste A1 bis A8, welche dann einen Kontakt K1 bis K8 betätigt, sofern sie in die in Fig. 4 gezeigte Lage gedrückt wird, oder ein Füllstück F anordnen, welches unbeweglich in der Tastenleiste 72 verrastet ist, derart daß der diesem Füllstück zugeordnete Kontakt K1 bis K8 nicht betätigt werden kann.

Der Frontrahmen 60 ist mit einem mittleren Ansatz 89 für die Anbringung eines Typenschildes und zwei seitlichen Ansätzen 90 und 91 versehen. Diese beiden Ansätze 90 und 91 dienen dazu, das Gehäuse zu verschrauben und eine entsprechende Plombierung anzubringen.

Die Füllstücke F wird man vorzugsweise in der gleichen Farbe halten wie den Frontrahmen 60 mit der Tastenleiste 72, während die Tasten A1 bis A8 in — auch untereinander — abweichenden Farben ausgebildet sein können. Damit kann beispielsweise die Hauptfunktionstaste gegenüber den anderen Tasten herausgehoben werden.

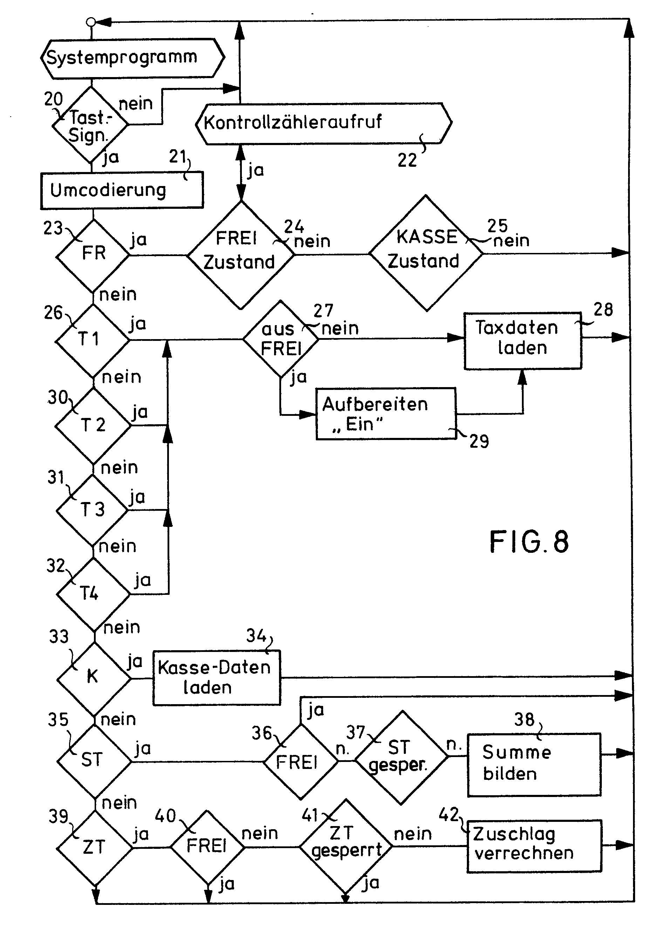

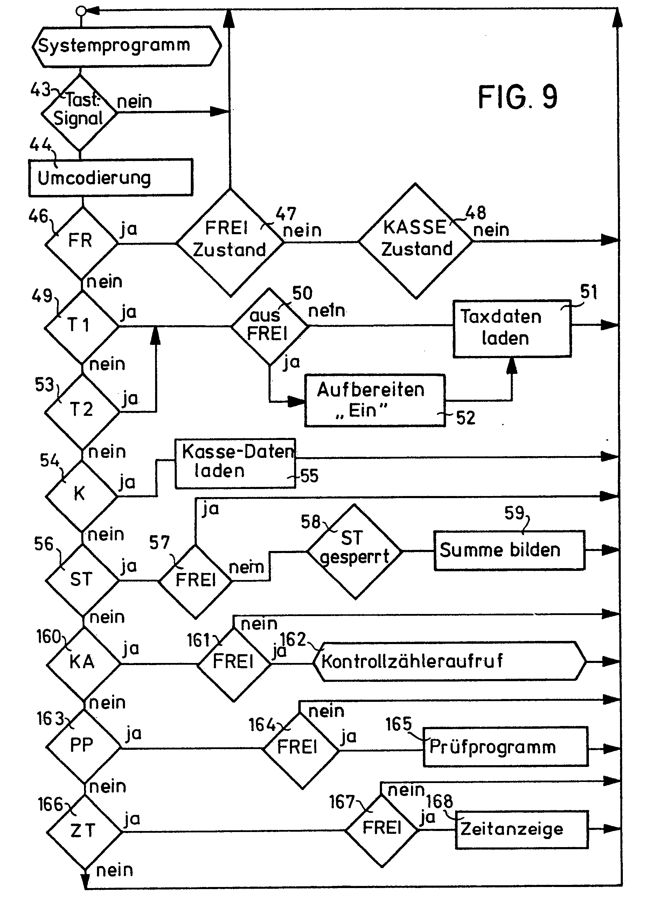

In den Fig. 7 bis 9 sind nun die Algorithmen mehrerer Tastenabfrageprogramme dargestellt, und zwar in Fig. 7 ein Beispiel für einen Taxameter mit vier Tasten A1—A4, bei dem also die übrigen vier Ausnehmungen 73 der Tastenleiste 72 mit Füllstücken F versehen sind. In den Fig. 8 und 9 sind die Algorithmen für zwei alternative Tastenabfrageprogramme dargestellt, die bei Verwendung von acht Tasten A1 bis A8 denkbar sind. Alle in Fig. 7 bis 9 dargestellten Programme lassen beliebige Abwandlungen zu, so daß der Taxameter entsprechend in seiner Funktionsweise variierbar ist.

Zunächst sei noch auf einige Punkte der Anordnung gemäß Fig. 1 eingegangen. In dem Tarifspeicher TPROM sind bei dem vorliegenden Taxameter nicht nur die Tarifdaten, sondern auch die den jeweiligen Tarifdaten zugeordneten Tasteninformationen gespeichert. Das hat den Vorteil, daß insbesondere bei einer kleineren Anzahl von Tasten, beispielsweise vier, jeder Taste bereits vom Anwender eine entsprechende Funktion zugeordnet werden kann. Ein weiterer Vorteil ist der, daß auch bestimmte Funktionsfolgen durch den Tarifspeicher festgelegt werden können. Eine solche Abspeicherung der Tasteninformationen und dazugehörigen Tarifdaten im Tarifspeicher ist jedoch nicht notwendig. Es ist auch möglich, im Tarifspeicher nur Sprungbefehle zu speichern und über diese ein alternatives Tastenabfrageprogramm im Systemprogramm in den Systemspeichern EPROM1 und/oder EPROM2 anzurufen, je nachdem was vom System her der günstigere Weg zu sein scheint. Grundsätzlich ist der Unterschied zwischen den Speichern TPROM und EPROM1 und 2 der, daß die Daten im Tarifspeicher TPROM jeweils von Stadt zu Stadt variieren werden, während die Systemprogramme, die in den Speichern EPROM1 und EPROM2 abgelegt sind, jeweils von Land zu Land sich unterscheiden werden, da in aller Regel für jedes Land die Grundstruktur des Tarifes in einer landeseinheitlichen Vorschrift für alle in diesem Land zugelassenen Taxameter niedergelegt ist.

Es sei nun auf das Ablaufschema gemäß Fig. 7 eingegangen, bei dem davon ausgegangen wird, daß nur vier Tasten vorhanden sind, und zwar eine Vorwärtsschalttaste VT, durch deren Betätigung der Taxameter jeweils von einer Funktionsstellung zur jeweils nächsten Funktionsstellung weitergeschaltet wird, eine Rückwärtstaste RT, bei der eine Zurückschaltung beispielsweise von Taxe II auf Taxe I oder von KASSE nach Taxe IV usw. möglich ist, aber z. B. keine Rückwärtsschaltung in die FREI-Stellung. Die dritte Taste ist dann die Summentaste ST, mit der in der BESETZT-Stellung die Summe aus Fahrpreis und Zuschlag gebildet werden kann, und eine Zuschlagtaste ZT, mit der die Zuschläge eingegeben werden können, d. h. bei jeder Betätigung dieser Taste wird ein bestimmter Betrag im Zuschlagzähler addiert. Die Tasten werden in den Fig. 7 bis 9 nicht mit A1 bis A8 bezeichnet, sondern mit Bezeichnungen wie VT, RT usw., weil es sich hier um die Veranschaulichung ihrer Funktionen handelt.

Innerhalb des Systemprogrammes ist das Tastenabfrageprogramm, wie es in den Fig. 7 bis 9 in verschiedenen Varianten dargestellt ist, jeweils ein Unterprogramm, das aus einer Anzahl von Entscheidungen und Funktionen besteht. Zunächst zur Erläuterung von Fig. 7: Die Vorwärtstaste VT wird abgefragt 1, ob sie gedrückt ist oder nicht. Ist sie gedrückt, so wird gemäß 2 entschieden, ob a) die vorhergehende Stellung eine beliebige Taxstellung I bis III war oder ob b) die vorhergehende Stellung die FREI-Stellung war. Bei a) werden nur die entsprechenden neuen Taxdaten aus dem Tarifspeicher entnommen, also beispielsweise die Werte für die Fortschalteinheit in Weg und Zeit. War dagegen die vorhergehende Stellung b) die FREI-Stellung, dann muß dieses Einschaltsignal aus der FREI-Stellung in Taxe I, II oder III jeweils aufbereitet werden, indem verschiedene Einstellungen durchgeführt werden und dergl. Erst danach können gemäß 4 die Tarif- bzw. Taxdaten für die Taxe I oder II oder III geladen werden.

Wurde die Vorwärtstaste VT gemäß 1 als nicht gedrückt befunden, dann wird als nächstes die Rückwärtsschalttaste RT gemäß 6 abgefragt. Ist diese Taste betätigt, so wird gemäß 7 zusätzlich festgestellt, ob der Taxameter sich in FREI-Position befindet. In diesem Falle hat die Taste RT zwei Funktionen. Ist der Taxameter in FREI-Position, so wird die Kontrollzähleranzeige gemäß 8 durchgeführt, was soviel besagt, wie daß nacheinander die einzelnen Kontrollzählerstände aus dem Hauptspeicher RAM abgerufen und auf die Anzeige AZ übertragen werden, um es den Kontrollpersonen zu ermöglichen festzustellen, welche Einnahmen der Taxifahrer während der vergangenen Abrechnungsperiode erzielt hat. Der Taxifahrer selbst kann sich selbstverständlich auf diese Art und Weise über seine Einnahmen informieren. War der Taxameter beim Betätigen der RT-Taste jedoch nicht in FREI-Stellung, dann hat er offensichtlich irgendeine andere Taxposition, beispielsweise die Position Taxe I oder Taxe II. Dann werden erneut die Schritte 2 und 4 durchgeführt, d. h. die neuen Taxdaten werden aus dem Tarifspeicher TPROM übernommen und zur Verrechnung bereitgestellt.

War auch die Rückwärtsschalttaste RT gemäß 6 nicht betätigt, dann wird als nächstes die Summentaste ST gemäß 9 abgefragt. Auch die Summentaste ST hat eine Doppelfunktion. Sie dient einerseits dazu, in der BESETZT-Stellung die Bildung der Summe von Zuschlag und Fahrpreis auszulösen und andererseits kann mit ihr in der FREI-Stellung eine Prüfung der Anzeige vorgenommen werden. Bei 10 wird also, wenn die Summentaste betätigt war, zunächst gefragt, ob der Taxameter sich in der FREI-Stellung befindet. Ist dies der Fall, dann setzt eine Prüfung der Anzeige ein, die so vorgenommen wird, daß die Anzeigeelemente in allen Dekaden gleichzeitig von 0 auf 1 auf 2 usw. durchgeschaltet werden. Auch eine andere Art der Kontrolle der Funktionstüchtigkeit des Taxameters kann auf diese Art und Weise durchgeführt werden. Ist bei Betätigung der Summentaste der Taxameter nicht in FREI-Stellung, dann wird gemäß 11 nochmals geprüft, ob die Summentaste eventuell gesperrt ist. Diese Prüfung ist deswegen erforderlich, weil nicht alle Taxameter für einen Zuschlag ausgerüstet sind, in diesem Fall darf die Summentaste in der BESETZT-Stellung keine Funktion haben. Ist die Summentaste aber nicht gesperrt, dann wird gemäß Programmschritt 12 die Summe aus Fahrpreis und Zuschlag gebildet und in der Regel am Anzeigefenster 64 gemäß Fig. 2 angezeigt.

War gemäß 9 die Summentaste nicht gedrückt, dann wird die Zuschlagtaste ZT gemäß 13 abgefragt. War die Zuschlagtaste betätigt, so wird gemäß 14 nochmals geprüft, ob die Zuschlagtaste in diesem Falle gesperrt ist, was dann der Fall sein wird, wenn der fragliche Taxameter nicht mit einer Zuschlageinrichtung ausgerüstet ist. Gemäß 15 erfolgt eine weitere Abfrage, ob bereits eine Summe nach Betätigung der Summentaste gebildet wurde, und erst wenn gemäß 14 und 15 beide Abfragen ein negatives Ergebnis haben, wird der entsprechende Zuschlag gemäß 16 verrechnet, d. h. in dem Zuschlagspeicher addiert und auch auf der Anzeige angezeigt, was am Fenster 65 sichtbar gemacht wird. Nach Abfrage aller vier Tasten läuft das Systemprogramm weiter.

Es ist im Prinzip gleichgültig, ob die Tasteninformation oder nur Sprungbefehle im Tarifspeicher TPROM gespeichert sind. Wird landesweit mit demselben Funktionsschema gearbeitet, dann dürfte es zweckmäßig sein, die Tasteninformation mit dem Tastenabfrageprogramm im Systemspeicher EPROM zu hinterlegen und im Tarifspeicher TPROM nur entsprechende Sprungbefehle vorzusehen. Sind von Stadt zu Stadt in einem Lande Unterschiede in den Tarifgestaltungen festzustellen, dann dürfte es zweckmäßiger sein, die Tasteninformation zusammen mit den entsprechenden Tarifdaten im Tarifspeicher TPROM zu hinterlegen.

Wesentlich an der Tastenabfrage gemäß Fig. 7 ist, daß hier den Tasten nicht jeweils eine ganz bestimmte Funktion zugeordnet ist, sondern unter Umständen entweder mehrere verschiedene Funktionen, wie dies beispielsweise bei den beiden Tasten RT und ST der Fall ist, oder eine ganze Funktionsfolge, wie dies bei den Tasten VT und RT der Fall ist.

Bei Verwendung einer größeren Tastenanzahl soll es oberstes Ziel sein, die Bedienung übersichtlicher zu machen, was im wesentlichen dadurch erreicht wird, daß jeder Taste vorzugsweise nur eine Funktion zugeordnet wird. Bei der Tastenabfragesteuerung gemäß Fig. 8 beispielsweise sind acht Tasten A1 bis A8 vorhanden, die in diesem Falle die folgenden Funktionen haben: FREI FR, Taxe I T1, Taxe II T2, Taxe III T3, Taxe IV T4, KASSE K, SUMME ST, ZUSCHLAG ZT. Da aber Taxameter, bei denen vier Taxen benötigt werden, nur selten gebraucht werden, zeigt Fig. 9 noch ein weiteres Beispiel für eine Tastenabfragesteuerung, bei der durch acht Tasten die folgenden Funktionen gesteuert werden können: FREI FR, Taxe I T1, Taxe II T2, KASSE K, SUMME ST, KONTROLLZÄHLERABFRAGE KA, PRÜFPROGRAMM PP, TAGESZEITANZEIGE TZ.

Gemäß Fig. 8 ist das Tastenabfrageprogramm wiederum ein Unterprogramm des Systemprogramms. Gemäß 20 erfolgt zunächst die Feststellung, ob ein Tastensignal vorhanden ist. Ist dies nicht der Fall, so kann das Systemprogramm ohne Durchführung der Tastenabfrage fortgeführt werden. Ist ein Tastensignal vorhanden, wird dieses bei 21 auf den systemeigenen Code umcodiert. Dann werden die acht Tastencodierungen nacheinander abgefragt, zunächst die FREI-Taste. Wurde sie betätigt, so wird eine weitere Entscheidung getroffen, ob sich der Taxameter bereits vorher im FREI-Zustand befand. Hierzu wird auf 22 verwiesen. In einem Unterprogramm wird jeweils wenn der Taxameter in FREI-Stellung ist, ein Kontrollzähleraufruf durchgeführt, d. h. aus dem Hauptspeicher RAM werden die Kontrolldaten nacheinander auf die Anzeige übertragen. Solange dieses Programm läuft, muß selbstverständlich irgendeine andere Tastenbetätigung eine Störung verursachen, so daß in dieser Zeit die Tasten wirkungslos geschaltet sein müssen. Dies geschieht durch die Abfrage, ob bei betätigter FREI-Taste der Kontrollzähleraufruf gemäß 22 beendet war. 24 löst also bei FREI einerseits den Kontrollzähleraufruf gemäß 22 aus, bewirkt aber andererseits eine Sperrung sonstiger Funktionen, solange 22 nicht abgeschlossen ist.

Gemäß 25 kann der Taxameter aber auch nur aus der KASSE-Stellung nach FREI geschaltet werden. Deshalb erfolgt eine Abfrage, ob vorher der KASSE-Zustand bestanden hat. Gemäß 26 wird erst T1 für Taxe I abgefragt. Ist sie betätigt, dann wird gemäß 27 zunächst festgestellt, ob die Einschaltung aus der FREI-Stellung heraus erfolgte. In diesem Falle erfolgt die Aufbereitung des Einschaltzustandes 29, indem verschiedene Nullstellungen durchgeführt werden, und erst danach werden die Taxdaten für Taxe I geladen (28). Erfolgte die Einschaltung der Taxe I nicht aus der FREI-Stellung heraus, sondern beispielsweise aus der Stellung für Taxe II, dann wird Schritt 29 übersprungen, und es werden unmittelbar gemäß 28 die Taxdaten für Taxe I in die entsprechenden Speicher aus dem Tarifspeicher TPROM eingegeben.

In gleicher Weise erfolgt nacheinander die Abfrage der Tasten T2, T3, T4 für Taxen II bis IV, 30, 31, 32. Gemäß 33 wird als nächstes dann die KASSE-Taste abgefragt. In diesem Falle werden gemäß 34 die KASSE-Daten aus dem Tarif-PROM entnommen. Hierbei handelt es sich hauptsächlich um die Abschaltung des Zeitantriebes, während die Wegdaten im wesentlichen erhalten bleiben. Gemäß 35 wird dann die Summentaste abgefragt. Befindet sich gemäß 36 in diesem Falle der Taxameter in der FREI-Stellung, so kann keine Summenbildung erfolgen. Befindet sich der Taxameter aber in irgendeiner der Stellungen T1 bis T4 oder K, dann wird gemäß 37 zusätzlich festgestellt, ob die Summentaste in diesem Falle gesperrt ist, was immer dann der Fall sein wird, wenn der Taxameter nicht mit einem Zuschlag ausgebildet ist. Ist die Summentaste nicht gesperrt, dann wird die Summe gemäß 38 gebildet und erscheint im Anzeigefenster 64 gemäß Fig. 2. Als letztes wird die Zuschlagtaste ZT abgefragt. Ist sie gedrückt, dann erfolgt gemäß 40 und 41 eine Abfrage, ob der Taxameter sich in FREI-Stellung befindet und ob evtl. die Zuschlagtaste gesperrt ist. In der FREI-Position dürfen keine Zuschläge eingegeben werden, und wenn der Taxameter keine Zuschlagfunktion hat, darf die Zuschlagtaste auch keine Zuschlagverrechnung bringen. Erst dann wird gemäß 42 der Zuschlag verrechnet.

Bei der Tastenabfrage gemäß Fig. 9 besteht hinsichtlich der Programmschritte 43 bis 59 Identität mit dem Auflaufschema gemäß Fig. 8 (Programmschritte 20 bis 38). Einzige Ausnahme ist, daß in diesem Falle nicht vier Taxtasten T1 bis T4 abgefragt werden, sondern nur zwei Taxtasten T1 und T2, so daß die Programmschritte 31 und 32 gemäß Fig. 8 ausgelassen sind.

Neu an dem Ablaufschema gemäß Fig. 9 ist, daß hier drei Tasten den Funktionen Kontrollzähleraufruf KA, Prüfprogramm PP und Trageszeitanzeige TZ zugeordnet sind. Nach dem Abfragen der Summentaste gemäß 56 bis 59 erfolgt die Abfrage der Taste KA. Der Kontrollzähleraufruf kann nur in der FREI-Stellung erfolgen. Ist der Taxameter also nicht in der FREI-Stellung, so geschieht nichts. Ist der Taxameter dagegen in FREI-Stellung, dann läuft das Programm für den Kontrollzähleraufruf gemäß 162 ab, d. h. die Kontrollzählerstände werden aus dem Hauptspeicher RAM entnommen und nacheinander auf die Anzeige AZ übertragen.

Als nächstes wird dann gemäß 163 die Taste für die Auslösung des Prüfprogrammes PP abgefragt. Das Prüfprogramm kann selbstverständlich nur in der FREI-Stellung erfolgen. Deswegen erfolgt gemäß 164 zusätzlich eine Abfrage, ob der Taxameter sich in der FREI-Stellung befindet. Danach wird das Prüfprogramm durchgeführt. Die Art des Prüfprogrammes kann beliebig sein, jedenfalls soll das Prüfprogramm es sowohl dem Taxifahrer als auch einem etwaigen Kundendiensttechniker ermöglichen, diese Funktionsprüfung des Taxameters durchzuführen, um Rückschlüsse auf die Art der Fehlfunktion zu erhalten.

Da jeder Taxameter auch mit einem Zeitgenerator versehen ist, ist es naheliegend, auch die Tageszeit in einem Speicher des RAM abzuspeichern. Um die Zeit sichtbar zu machen, muß eine Taste gedrückt werden, die gemäß 166 als Tageszeittaste TZ bezeichnet ist. Die Zeitanzeige gemäß 168 erfolgt aber nur, wenn gemäß 167 der Taxameter in FREI-Stellung ist.

Anhand der Fig. 7 bis 9 wurden Tastenabfrageschemen beschrieben, die mit vier bzw. acht Tasten arbeiten. Selbstverständlich ist aber bei entsprechender Programmierung auch jeweils eine andere Anzahl von Tasten möglich. Die Tastenleiste 72 ermöglicht es, jede beliebige Anzahl von Tasten zwischen eins und acht vorzusehen. Wenn mehr als acht Funktionen aufgerufen werden sollen, werden wie bei der Tastenabfrage gemäß Fig. 7 für die beiden Tasten RT und ST beschrieben, einer oder mehreren Tasten jeweils mehrere Funktionen zugeordnet.

**Patentansprüche**

1. Anordnung zur Steuerung eines elektronischen Taxameters hinsichtlich seiner verschiedenen Schaltzustände vermittels Tasten (A1 bis A8), die über eine Codiermatrix (C) codierte Signale an eine Eingangsschaltung abgeben, dadurch gekennzeichnet, daß am Gehäuse eine Tastenleiste (72) vorgesehen ist, die für eine Maximalzahl von Tasten (A1 bis A8) ausgelegt ist, aber wahlweise auch mit weniger Tasten belegbar ist, daß im Gehäuse eine der maximalen Tastenzahl entsprechende Anzahl von Schaltern (K1 bis K8) vorhanden ist und daß über Tasteninformationen oder Sprungbefehle im Tarifspeicher (TPROM) verschiedene Tastenabfragezyklen in dem Systemprogramm (EPROM1, EPROM2) ausgelöst werden, durch die bei einer geringeren Anzahl von vorhandenen Tasten einer Taste bzw. einer Tastencodierung mehrere Funktionen zuordenbar sind, hingegen bei einer höheren Anzahl von vorhandenen Tasten bzw. Tastencodierungen vorzugsweise nur eine Funktion je Taste.

2. Anordnung nach Anspruch 1, dadurch gekennzeichnet, daß die Tastenleiste (72) für jede der maximal vorgesehenen Tasten (A1 bis A8) eine Ausnehmung (73) enthält, in die entweder eine Taste (A1 bis A8) mit Feder (76) einsetzbar ist, die über die Tastenleiste (72) vorspringt oder daß ein Füllstück (F) die Ausnehmung (73) — plan oder zurückversetzt — verschließt.

3. Anordnung nach Anspruch 1 und 2, dadurch gekennzeichnet, daß an der Rückseite des die Tastenleiste (72) aufweisenden Frontrahmens (60) Vorsprünge (79) für die Führung der Tasten (A1 bis A8) und der Füllstücke (F) vorgesehen sind und daß die Füllstücke (F) sich in diesen Vorsprüngen (79) verrasten.

4. Anordnung nach Anspruch 1 bis 3, dadurch gekennzeichnet, daß die Vorsprünge (79) und die Füllstücke (F) gleichzeitig der Festlegung des Frontschriftblattes (63) an entsprechenden Ansätzen (80) desselben dienen.

5. Anordnung nach Anspruch 1 bis 4, dadurch gekennzeichnet, daß die Ansätze (80) des Frontschriftblattes (63) als Auflage- und Bewegungsbegrenzungsfläche für die Tasten (A1 bis A8) und deren Federn (76) dienen.

6. Anordnung nach Anspruch 1 bis 5, dadurch gekennzeichnet, daß die Tasten (A1 bis A8) in einer oder mehreren, von der Farbe des Frontrahmens (60) abweichenden Farbe (n) gehalten sind, während die Füllstücke (F) die gleiche Farbe wie der Frontrahmen (60) haben.

7. Anordnung nach Anspruch 1, dadurch gekennzeichnet, daß das Systemprogramm (EPROM1) in seiner Grundausstattung die Tastenabfragezyklen für die geringere Anzahl Tasten (A1 bis A8) enthält und daß bei Verwendung einer höheren Anzahl Tasten (A1 bis A8) die Tastenabfragezyklen in einem Zusatzprogrammbaustein (EPROM2) gespeichert sind.

## Claims

1. Device for controlling an electronic taximeter with respect to the various functional states by means of keys ($A_1$ to $A_8$) which by means of a coding matrix (C) produce coded signals for an input circuit,
characterized in
that at the housing a key bar (72) is provided which is adapted to take up a maximal number of keys ($A_1$ to $A_8$) which, however, selectively may take up also less keys,
that in the housing a number of switches ($K_1$ to $K_8$) is provided corresponding to the maximal number of keys and that by key information or jumb commands in the tariff store (TPROM) various key sensing cycles may be released in the system program (EPROM1, EPROM2) so that with a lower number of keys arranged in the key bar several functional states may be attributed to one key respectively one key coding whilst when a higher number of keys respectively key codings is provided preferably only one functional state is attributed to each key.

2. Device according to claim 1, characterized in that the key bar (72) for each of the maximally provided keys ($A_1$ to $A_6$) is provided with a cut-out (73) into which either a key ($A_1$ to $A_8$) with a spring (76) may be inserted so that the key projects above the key bar (72) or that a filling piece (F) closes the cut-out (73) either in one plane with the key bar (72) or retracted therefrom.

3. Device according to claims 1 and 2, characterized in that the reverse side of the front frame (60) taking up the key bar (72) is provided with projections (79) for guiding the keys ($A_1$ to $A_8$) and the filling pieces (F), the filling pieces (F) catching behind these projections (79).

4. Device according to claims 1 and 3, characterized in that the projections (79) and the filling pieces (F) simultaneously serve to fix the scale plate (63) at corresponding projections (80) thereat.

5. Device according to claims 1 to 4, characterized in that the projections (80) of the scale plate (36) serve as surfaces for supporting and limiting the movement of the keys ($A_1$ to $A_8$) and its springs (76).

6. Device according to claims 1 to 5, characterized in that the keys ($A_1$ to $A_8$) are made in a colour deviating from the colour of the front frame (60) in which they are retained while the filling pieces (F) are made in the same colour as the front frame (60).

7. Device according to claim 1, characterized in that the system program (EPROM1) in it basic configuration contains a key sensing subroutine for the lower number of keys ($A_1$ to $A_8$) and that for providing a higher number of keys ($A_1$ to $A_8$) a key sensing subroutine is stored in an additional program module (EPROM2).

## Revendications

1. Dispositif pour la commande d'un taximètre électronique en ce qui concerne ses différents états de commutation au moyen de touches A1 à A8 qui délivrent, par l'intermédiaire d'une matrice de codage (C), des signaux codés à un circuit d'entrée,
caractérisé par le fait
que sur le boîtier est prévue une barrette à touches (72) qui est dimensionnée pour un nombre maximal de touches (A1 à A8) mais qui peut aussi être occupée, facultativement, par un nombre de touches inférieur,
que le boîtier comprend un nombre de commutateurs (K1 à K8) correspondant au nombre maximal de touches et
que, par l'intermédiaire d'informations de touche ou d'instructions de saut dans la mémoire de tarif (TPROM) divers cycles d'interrogation de touche peuvent être déclenchés dans le programme de système (EPROM1, EPROM2) au moyen desquels, en cas d'un nombre de touches existantes inférieur, plusieurs fonctions peuvent être affectées à une touche ou à un codage de touche, alors qu'en cas d'un nombre de touches existantes ou de codages de touche supérieur, une seule fonction sera affectée, de préférence, à chaque touche.

2. Dispositif selon la revendication 1, caractérisé par le fait que la barrette à touches (72) contient pour chacune des touches prévues au maximum (A1 à A8) un évidement (73) dans lequel on peut placer soit une touche (A1 à A8) avec ressort (76) qui rebondit en avant de la barrette à touches (72), soit une pièce de remplissage (F) qui obture l'évidement (73) en étant au même plan ou en retrait de la barrette à touches.

3. Dispositif selon l'une quelconque des revendications 1 et 2, caractérisé par le fait que sur la face arrière du cadre frontal (60) comportant la barrette à touches (72) sont prévues des saillies (79) pour le guidage des touches (A1 à A8) et des pièces de remplissage (F) et que lesdites pièces de remplissage (F) se verrouillent dans lesdites saillies (79).

4. Dispositif selon l'une quelconque des revendications 1 à 3, caractérisé par le fait que les saillies (79) et les pièces de remplissage (F) servent simultanément à la fixation de la feuille imprimée frontale (63) sur des appendices appropriés (80).

5. Dispositif selon l'une quelconque des revendications 1 à 4, caractérisé par le fait que les appendices (80) de la feuille imprimée frontale (63) servent de surface d'appui et de limitation de mouvement aux touches (A1 à A8) et à leurs ressorts (76).

6. Dispositif selon l'une quelconque des revendications 1 à 5, caractérisé par le fait que les touches (A1 à A8) sont en un ou plusieurs coloris différent du coloris du cadre frontal (60) alors que les pièces de remplissage (F) ont le même coloris que le cadre frontal (60).

7. Dispositif selon la revendication 1, caractérisé par le fait que le programme de système (EPROM1) dans sa version de base contient les cycles d'interrogation de touches pour le plus petit nombre de touches (A1 à A8) et qu'en cas d'utilisation d'un plus grand nombre de touches (A1 à A8) les cycles d'interrogation de touche sont mémorisés dans un composant de programmation supplémentaire (EPROM2).

FIG. 1

FIG. 2

FIG. 3

FIG. 4

# FIG. 7

Systemprogramm

Taxdaten laden — 4

1 — VT
ja

a 2

b

Aufbereitung „Ein" — 3

nein

6 — RT
ja

nein 7 — FREI
ja

Kontrollzähler-anzeige — 8

nein

Anzeige prüfen

9 — ST
ja

ja 10 — FREI
nein

11 — ST gesperrt
nein

Summe bilden — 12

nein

13 — ZT
ja

14 — ZT gespr.
nein

15 — Summe gebildet
nein

Zuschläge verrechnen — 16

ja

ja

A1

76 75

74

88

FIG. 5

F

82 84

81

83 85

FIG. 6

FIG. 8

# FIG. 9

Systemprogramm

43 Tast. Signal — nein →

44 Umcodierung

46 FR — ja → FREI Zustand 47 — nein → KASSE Zustand 48 — nein →

FR — nein

49 T1 — ja → aus FREI 50 — nein → Taxdaten laden 51 →

aus FREI — ja → Aufbereiten „Ein" 52 → Taxdaten laden

49 T1 — nein

53 T2 — ja →

53 T2 — nein → Kasse-Daten laden 55 →

54 K — ja →

54 K — nein

56 ST — ja → 57 FREI — ja ↑

57 FREI — nein → 58 ST gesperrt → Summe bilden 59 →

56 ST — nein →

160 KA — ja → 161 FREI — nein →

161 FREI — ja 162 → Kontrollzähleraufruf →

160 KA — nein →

163 PP — ja → 164 FREI — nein →

164 FREI — ja → Prüfprogramm 165 →

163 PP — nein →

166 ZT — ja → 167 FREI — nein 168 →

167 FREI — ja → Zeitanzeige →

166 ZT — nein ↓